# EUROPÄISCHE PATENTANMELDUNG

(11) **EP 1 209 356 A1**
(43) Veröffentlichungstag der Anmeldung: **29.05.2002**
(21) Anmeldenummer: 00125546.2
(22) Anmeldetag: 22.11.2000
(51) Int. Cl.: F03B 15/02, F03B 3/02, F03B 3/10

(54) **Turbine oder Pumpturbine**

(71) Anmelder: VA TECH HYDRO GmbH & Co., 1140 Wien (AT)
(72) Erfinder: Angehrn, Richard, 8180 Bülach (CH)
(74) Vertreter: VA TECH Patente GmbH & Co

(57) **Zusammenfassung**

Hydraulische Turbinen oder Pumpturbinen werden für eine bestimmten Betriebszustand ausgelegt, in dem die Turbine oder Pumpturbine optimal betrieben werden kann. Aufgrund von Bedarfsschwankungen werden Turbinen oder Pumpturbinen jedoch oft außerhalb dies ausgelegten optimalen Betriebszustandes betrieben. Die vorliegende Erfindung zeigt eine Turbine oder Pumpturbine, deren optimaler Betrieb über einen breiten Bereich von Betriebszuständen gewährleistet wird, indem die Laufradhaube im Betrieb gezielt axial verschoben wird.

## Beschreibung

Die Erfindung betrifft eine hydraulische Turbine oder Pumpturbine mit zumindest einem mit einer Turbinenwelle drehfest verbundenen, drehbaren Laufrad, bestückt mit einer Vielzahl von Turbinenschaufeln, und mit einer Laufradhaube, sowie ein Verfahren zum Optimieren des Betriebes einer Turbine oder Turbinenpumpe.

Turbinen oder Turbinenpumpen werden in der Regel für einen bestimmten Betriebszustand, oft der Vollbetrieb, ausgelegt und können deshalb nur in, oder in Nähe, dieses bestimmten Betriebszustandes optimal betrieben werden. Außerhalb dieses Betriebszustand kommt es aufgrund einer nicht optimalen Strömung zu unerwünschten Effekten, wie Druckschwankungen im Strömungsrohr, Ausbildung eines Teillastzopfes, unruhiger Lauf, etc, die den Wirkungsgrad der Turbine oder der Pumpturbineverringern. Um dies zu vermeiden können verschiedene Maßnahmen, wie z.B. das Einblasen von Luft in die Strömung, gesetzt werden.

Ein anderer Ansatz zur Stabilisierung der Strömung ist in der EP 621 923 B1 offenbart, in der eine Wasserturbine mit einem drehbaren Läufer mit einer Vielzahl von Schaufeln und einem Leitelement gezeigt wird, wobei das Leitelement unabhängig von der Drehung des Läufers gelagert ist. Das Leitelement wird dabei unabhängig von der Drehung des Läufers verdreht, um so die Strömung im Bereich des Leitelementes zu beeinflussen. Die Beeinflussung der Strömung erfolgt insbesondere durch eine erhöhte Reibung am Leitelement durch die durch die unterschiedlichen Drehzahlen von Leitelement und Läufer bewirkten Relativbewegungen und/oder durch ausfahrbare und rückziehbare Leitbleche auf dem Leitelement. Eine Beschränkung der Einflussnahme allein auf den Reibeffekt, erschwert die Steuerbarkeit der erzeugten Wirkung, da sie nur von der Grenzschicht der Strömung ausgeht.

Die vorliegende Erfindung zielt darauf ab, eine Turbine oder Pumpturbine anzugeben, mit der die Strömung mit einfachen Mitteln über einen breiten Betriebsbereich stabil gehalten werden kann.

Das gesetzte Ziel ist erfindungsgemäß dadurch gelöst, dass die Laufradhaube gegenüber dem Laufrad im Stillstand und/oder im Betrieb in axialer Richtung verschiebbar ist. Das erfindungsgemäße Verfahren besteht aus den Schritten Messen von bestimmten Betriebsparametern, wie Drücke, Schwingungen, etc., im Betrieb, Verarbeiten dieser Betriebsparameter in einer Regelungseinheit und axiales Verschieben der Laufradhaube bis eine optimale Position für einen vorgegebenen Betriebszustand erreicht wird oder Berechnen der optimalen axialen Verschiebung der Laufradhaube zum Erreichen eines vorgebbaren Betriebszustandes und axiales Verschieben der Laufradhaube in die berechnete optimale Position.
Die Ausführung der axial verschiebbaren Laufradhaube kann mit einfachen Mitteln umgesetzt werden, und erlaubt sowohl eine Nachrüstung bereits bestehender Turbinen- oder Turbinenpumpenanlagen, als auch eine einfache Neuplanung. Darüber hinaus ist die Wirkung der axialen Verschiebung auf das Strömungsverhalten des Betriebsmediums sehr gut erfassbar und steuerbar, was die einfache Einbindung in ein Regelsystem ermöglicht. Damit können mit einfachen Mitteln optimale Einstellungen für einen breiten Betriebsbereich gewährleistet werden, was sich in einem höheren Wirkungsgrad der Turbine oder Pumpturbine niederschlägt.

Die Laufradhaube kann alternativ mit dem Laufrad drehfest verbunden sein und sich mit diesem mitdrehen, oder mit dem stationären Teil der Turbine undrehbar verbunden sein. Beide Möglichkeiten sind vorteilhaft anwendbar.

Eine vorteilhafte Ausführungsform erhält man, wenn an der Laufradhaube eine innere und/oder äußere axiale Führungsfläche vorgesehen ist, die mittels zumindest eines innerhalb und/oder außerhalb der Laufradhaube am Laufrad oder an der Turbinenwelle angebrachten Führungsringes axial führbar ist. Diese Ausführungsform ist einfach umsetzbar und bietet eine sichere Führung der Laufradhaube.

Der Antrieb zur axialen Verschiebung der Laufradhaube ist sehr vorteilhaft entweder hydraulisch, pneumatisch, mechanisch oder elektrisch ausgeführt.

Eine vorteilhafte Ausführungsform ergibt sich, wenn die Turbinenwelle in axialer Richtung hohl ausgebildet ist und durch die Turbinenwelle eine mit der Laufradhaube verbundene, in axialer Richtung verschiebbare Steuerstange durchgeführt ist, die an der der Laufradhaube abgewandten Seite mit dem Antrieb zur axialen Verschiebung verbunden ist. Dadurch, dass der Axialantrieb über eine durch die Turbinenwelle durchgeführte Steuerstange auf die Laufradhaube wirkt, kann die Verbindung Turbinenwelle, Laufrad und Laufradhaube konstruktiv einfacher und kompakter ausgeführt werden. Der Antrieb kann damit an einer beliebigen Stelle im stationären Teil der Turbine angebracht werden.
Falls es die konstruktiven Gegebenheiten zulassen kann die Laufradhaube auch mit zumindest einer axial verschiebbaren Steuerstange verbunden sein, die wiederum mit dem an der der Laufradhaube zugewandten Stirnseite der Turbinenwelle oder des Laufrades befestigten Antrieb zur axialen Verschiebung verbunden ist.
Eine weitere sehr vorteilhafte Ausführungsvariante ergibt sich, wenn der Antrieb zur axialen Verschiebung so ausgeführt ist, dass er direkt auf die Laufradhaube wirkt, womit man die Steuerstangen einsparen kann.

Die Turbine oder Pumpturbine wird ganz besonders vorteilhaft so betrieben, dass die axiale Verschiebung der Laufradhaube so einstellbar ist, dass der Betrieb der Turbine oder Pumpturbine hinsichtlich bestimmter vorgebbarer Betriebsparameter, beispielsweise maximaler Wirkungsgrad, minimale Druckschwankungen im Saugrohr, maximale Strömungsstabilität im Saugrohr, minimale Turbinenwellenschwingung, maximale Laufruhe, etc., optimierbar ist. Damit erhält man die Möglichkeit die Turbine oder Pumpturbine auch außerhalb des ausgelegten Betriebszustandes optimal betreiben zu können, was den Wirkungsgrad einer Turbine oder Pumpturbine wesentlich erhöht. Außerdem können auch die Wartungsintervalle verkürzt werden, da die Turbine oder Pumpturbine außerhalb des idealen Betriebszustandes nicht mehr übermäßig stark belastet wird.
Sehr vorteilhaft wird dazu ein Mittel zum Messen bestimmter Betriebsparameter, wie Drücke, Schwingungen, etc., im Betrieb vorgesehen, weiters eine Regelungseinheit zur Verarbeitung dieser Messwerte vorgesehen und die axiale Position der Laufradhaube so lange verändert, bis eine optimale Position für einen vorgegebenen Betriebszustand gefunden ist.
Als eine weitere günstige Alternative wird ein Mittel zum Messen bestimmter Betriebsparameter, wie Drücke, Schwingungen, etc., im Betrieb vorgesehen, eine Regelungseinheit zur Verarbeitung dieser Messwerte vorgesehen, die optimale axiale Verschiebung der Laufradhaube zum Erreichen eines vorgebbaren Betriebszustandes in der Regelungseinheit berechnet und die Laufradhaube in diese berechnete optimale Position verschoben. Damit kann sehr schnell auf sich ändernde Betriebszustände reagiert werden und sehr rasch die optimale axiale Verschiebung der Laufradhaube eingestellt werden.

Als weitere zusätzliche Unterstützung zur Einstellung eines optimalen Betriebszustandes wird über die Laufradhaube Gas, insbesondere Luft, in die Strömung des Betriebsmediums eingebracht.

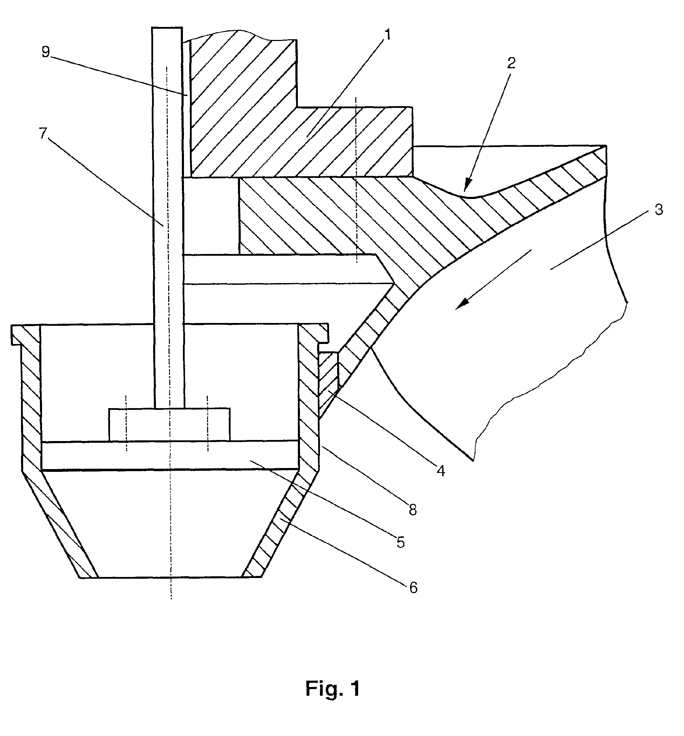

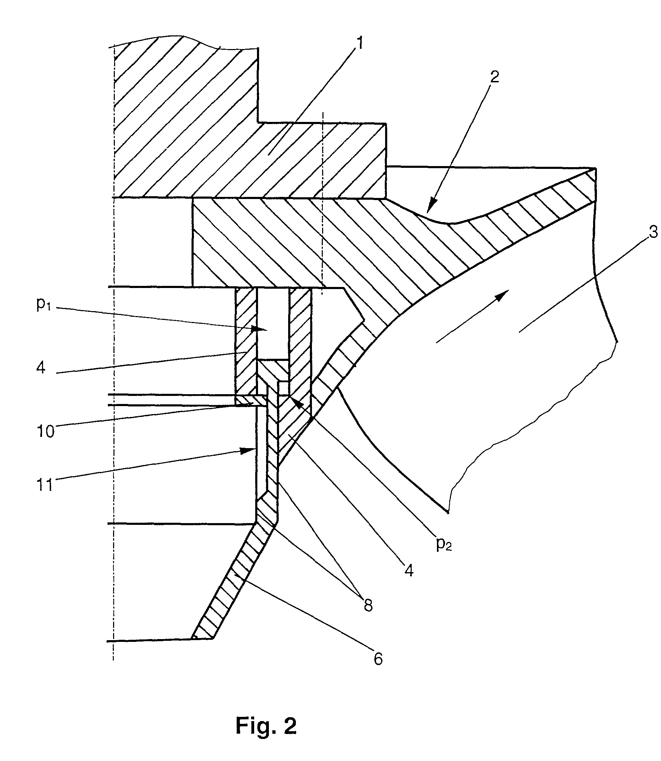

Die Erfindung wird anhand der in den Figuren 1 und 2 dargestellten schematischen, beispielhaften und nicht einschränkenden Ausführungsbeispielen beschrieben. Die Figuren zeigen:
Fig. 1 eine Teilansicht einer Turbine mit einer mittels einer Steuerstange 7 axial verschiebbaren Laufradhaube 6 und
Fig. 2 eine Teilansicht einer Pumpturbine mit einem direkt wirkenden Antrieb zur axialen Verschiebung der Laufradhaube 6.

In Fig. 1 ist schematisch eine Turbine, insbesondere eine Francis-Wasserturbine, bestehend aus einer Turbinenwelle 1, einem Laufrad 2, mit einer Vielzahl von Turbinenschaufeln 3, sowie einer Laufradhaube 6 dargestellt. Der Pfeil in der Turbinenschaufel 3 zeigt die Strömungsrichtung des Betriebsmediums an. Das Laufrad 2 ist bei diesem Ausführungsbeispiel an die Turbinenwelle 2 angeflanscht. Die Turbinenwelle 1 weist eine koaxiale Bohrung 9 auf, die sich durch die ganze Länge der Turbinenwelle 1 erstreckt und durch die eine Steuerstange 7 durchgeführt ist. Die Steuerstange ist mittels eines hier nicht dargestellten Antriebes im Stillstand und/oder Betrieb der Turbine axial verschiebbar und an ihrer dem Laufrad zugewandten Stirnseite mit einer Scheibe 5 verbunden. Der Antrieb kann entweder von hydraulischer, pneumatischer, elektrischer oder mechanischer Wirkung, oder eine Kombination daraus, sein. Weiters ist die Steuerstange 7 und/oder die Laufradhaube 6 mit der Turbinenwelle 1 und/oder dem Laufrad 2 verbunden und dreht sich mit diesen mit. An der Scheibe 5 ist die Laufradhaube 6 befestigt. Die Laufradhaube 6 besitzt eine äußere Führungsfläche 8, die in einem Führungsring 4 geführt wird. Bei diesem Ausführungsbeispiel ist der Führungsring 4 am Laufrad 2 befestigt und so ausgeführt, dass ein Verkanten der Laufradhaube 6 beim axialen Verschieben verhindert wird.
Es ist natürlich auch denkbar die Führungsfläche 8 innen an der Laufradhaube 6 vorzusehen und den Führungsring 4 entsprechend am Laufrad 2 oder auch an der Turbinenwelle 1 anzuordnen, oder eine Kombination der beiden Möglichkeiten auszuführen. Diese Entscheidung obliegt dabei einem entsprechenden Fachmann gemäß den jeweiligen konstruktiven Gegebenheiten.
Die äußere Form der Laufradhaube 6 ist in diesem Ausführungsbeispiel ein auf einem Zylinder aufgesetzter Konus. Diese Form ist jedoch beliebig wählbar und es obliegt wiederum einem Fachmann, die für den jeweiligen Anwendungsfall bestpassende Form zu wählen. Auch sind Ausführungen denkbar, bei denen die Form je nach Bedarf, im Stillstand oder im Betrieb, veränderbar ist.
Die Laufradhaube 6 muss sich weiters nicht in zwingender Weise mit der Turbinenwelle 1 mitdrehen, sondern kann auch festgehalten oder unabhängig davon bewegt werden.
Weiters ist es auch im Rahmen der Erfindung die Turbinenwelle 1 nicht hohl auszuführen und die Steuerstange 7 mit zugehörigen Axialantrieb an der der Laufradhaube 6 zugewandten Stirnseite der Turbinenwelle 1 oder des Laufrades 2 anzubringen. Es ist natürlich auch möglich mehrere Steuerstangen 7 und zugeordnete Antriebe vorzusehen.

Durch die axiale Verschiebung der Laufradhaube 6 wird das Betriebsverhalten der Turbine, vor allem in Teillastbereichen, durch die Stabilisierung der Strömung, hervorgerufen durch die Verengung oder der Erweiterung des Strömungsquerschnittes, verbessert. Dazu werden bestimmte Betriebsparameter, wie Drücke, Schwingungen, etc., an verschiedenen Stellen im Betrieb gemessen und einer nicht dargestellten Regelungseinheit zugeführt. Diese Regelungseinheit kann die axiale Verschiebung der Laufradhaube 6 solange ansteuern, bis ein vorgegebener Betriebszustand erreicht wird, oder die Regelungseinheit errechnet aus den gemessenen Betriebsparametern die optimale axiale Verschiebung der Laufradhaube 6 und steuert die entsprechende Verschiebung an. Die Optimierung des Betriebszustandes kann insbesondere hinsichtlich maximaler Wirkungsgrad, minimale Druckschwankungen im Saugrohr, maximale Strömungsstabilität im Saugrohr, minimale Turbinenwellenschwingung, maximale Laufruhe, etc., oder einer Kombination davon, durchgeführt werden.

Das Ausführungsbeispiel in Fig. 2 zeigt eine Pumpturbine mit einem direkt auf die Laufradhaube 6 wirkenden hydraulischen oder pneumatischen axialen Antrieb. Der Pfeil in der Turbinenschaufel 3 zeigt wiederum die Strömungsrichtung des Betriebsmediums an. Die Laufradhaube 6 weist eine innere und eine äußere Führungsfläche 8 auf, die in zwei Führungsringen 4, einem inneren und einem äußeren, geführt sind. Die Räume, die zwischen den Führungsringen 4 in der Laufradhaube 6 entstehen, werden als Druckvolumina p₁ und p₂ verwendet. p₁ dient dabei zum Verschieben der Laufradhaube 6 vom Laufrad 2 weg und p₂ zum Verschieben der Laufradhaube 6 in Richtung zum Laufrad 2 hin. Als Druckmedium kann direkt das Betriebsmedium dienen, oder es kann auch ein beliebiges anderes Druckmedium, z.B. Luft oder Öl, verwendet werden.
Die Laufradhaube 6 weist axiale Nute 11 auf, in die ein Mitnehmer 10 eingreift, um das Mitrotieren der Laufradhaube 6 mit der Turbinenwelle 1 und dem Laufrad 2 zu gewährleisten. Das Mitrotieren der Laufradhaube 6 kann natürlich auch durch beliebige andere konstruktive Maßnahmen sichergestellt werden, oder, wie in den Ausführungen zu Fig. 1 bereits beschrieben, unterbunden werden.
Zur Steuerung der axialen Verschiebung der Laufradhaube 6 gilt das bereits bei der Beschreibung der Fig. 1 gesagte.

Die mittels der Ausführungsbeispiele in Fig. 1 und Fig. 2 beschriebenen Antriebe sind nicht erschöpfend. Insbesondere können noch beliebige andere Antriebe zur axialen Verschiebung der Laufradhaube 6 eingesetzt werden. Es liegt im Entscheidungsbereich eines entsprechenden Fachmannes, den für den speziellen Anwendungsfall bestpassenden Antrieb zu wählen.
Zur weiteren Unterstützung der axial verschiebbaren Laufradhaube 6 ist es auch möglich über die Laufradhaube 6 Gas, insbesondere Luft, in die Strömung einzubringen. Dies kann beispielsweise durch Öffnungen, wie Schlitze, Bohrungen, etc., geschehen, welche dafür im zylindrischen oder konischen Teil der Laufradhaube 6 vorgesehen werden. Das gasförmige Medium kann so an verschiedenen Stellen in das Betriebsmedium eingebracht werden.

## Patentansprüche

1. Hydraulische Turbine oder Pumpturbine mit zumindest einem mit einer Turbinenwelle (1) drehfest verbundenen, drehbaren Laufrad (2), bestückt mit einer Vielzahl von Turbinenschaufeln (3), und mit einer Laufradhaube (6), **dadurch gekennzeichnet, dass** die Laufradhaube (6) gegenüber dem Laufrad (2) im Stillstand und/oder im Betrieb in axialer Richtung verschiebbar ist.

2. Turbine oder Pumpturbine nach Anspruch 1, **dadurch gekennzeichnet, dass** die Laufradhaube (6) mit dem Laufrad (2) drehfest verbunden ist und sich mit diesem mitdreht.

3. Turbine oder Pumpturbine nach Anspruch 1, **dadurch gekennzeichnet, dass** die Laufradhaube (6) mit dem stationären Teil der Turbine undrehbar verbunden ist.

4. Turbine oder Pumpturbine nach Anspruch 2 oder 3, **dadurch gekennzeichnet, dass** an der Laufradhaube (6) eine innere und/oder äußere axiale Führungsfläche (8) vorgesehen ist, die mittels zumindest eines innerhalb und/oder außerhalb der Laufradhaube (6) am Laufrad (2) oder an der Turbinenwelle (1) angebrachten Führungsringes (4) axial führbar ist.

5. Turbine oder Pumpturbine nach einem der Ansprüche 1 bis 4, **dadurch gekennzeichnet, dass** die Laufradhaube (6) mittels eines hydraulischen, pneumatischen, mechanischen oder elektrischen Antriebes axial verschiebbar ist.

6. Turbine oder Pumpturbine nach Anspruch 5, **dadurch gekennzeichnet, dass** die Turbinenwelle (1) in axialer Richtung hohl ausgebildet ist, **dass** durch die Turbinenwelle (1) eine mit der Laufradhaube (6) verbundene, in axialer Richtung verschiebbare Steuerstange (7) durchgeführt ist **und dass** die Steuerstange (7) an der der Laufradhaube (6) abgewandten Seite mit dem Antrieb zur axialen Verschiebung verbunden ist.

7. Turbine oder Pumpturbine nach Anspruch 5, **dadurch gekennzeichnet, dass** die Laufradhaube (6) mit zumindest einer axial verschiebbaren Steuerstange (7) verbunden ist **und dass** die zumindest eine Steuerstange (7) mit dem an der der Laufradhaube (6) zugewandten Stirnseite der Turbinenwelle (1) oder des Laufrades (2) befestigten Antrieb zur axialen Verschiebung verbunden ist.

8. Turbine oder Pumpturbine nach Anspruch 5, **dadurch gekennzeichnet, dass** der Antrieb zur axialen Verschiebung so ausgeführt ist, dass er direkt auf die Laufradhaube (6) wirkt.

9. Turbine oder Pumpturbine nach einem der Ansprüche 1 bis 8, **dadurch gekennzeichnet, dass** die axiale Verschiebung der Laufradhaube (6) so einstellbar ist, dass der Betrieb der Turbine oder Pumpturbine hinsichtlich bestimmter vorgebbarer Betriebsparameter, beispielsweise maximaler Wirkungsgrad, minimale Druckschwankungen im Saugrohr, maximale Strömungsstabilität im Saugrohr, minimale Turbinenwellenschwingung, maximale Laufruhe, etc., optimierbar ist.

10. Turbine oder Pumpturbine nach Anspruch 9, **dadurch gekennzeichnet, dass** ein Mittel zum Messen bestimmter Betriebsparameter, wie Drücke, Schwingungen, etc., im Betrieb vorgesehen ist, dass eine Regelungseinheit zur Verarbeitung dieser Messwerte vorgesehen ist und dass die axiale Position der Laufradhaube (6) so lange veränderbar ist, bis eine optimale Position für einen vorgegebenen Betriebszustand gefunden ist.

11. Turbine oder Pumpturbine nach Anspruch 9, **dadurch gekennzeichnet, dass** ein Mittel zum Messen bestimmter Betriebsparameter, wie Drücke, Schwingungen, etc., im Betrieb vorgesehen ist, **dass** eine Regelungseinheit zur Verarbeitung dieser Messwerte vorgesehen ist **dass** die optimale axiale Verschiebung der Laufradhaube (6) zum Erreichen eines vorgebbaren Betriebszustandes in der Regelungseinheit berechenbar ist **und dass** die Laufradhaube (6) in diese berechnete optimale Position verschiebbar ist.

12. Turbine oder Pumpturbine nach einem der Ansprüche 1 bis 11, **dadurch gekennzeichnet, dass** über die Laufradhaube (6) Gas, insbesondere Luft, in die Strömung des Betriebsmediums einbringbar ist.

13. Verfahren zum Optimieren des Betriebes einer hydraulischen Turbine oder Pumpturbine mit axial verschiebbarer Laufradhaube (6) bestehend aus den Schritten
- Messen von bestimmten Betriebsparametern, wie Drücke, Schwingungen, etc., im Betrieb,
- Verarbeiten dieser Betriebsparameter in einer Regelungseinheit und
- axiales Verschieben der Laufradhaube (6) bis eine optimale Position für einen vorgegebenen Betriebszustand erreicht wird.

14. Verfahren zum Optimieren des Betriebes einer hydraulischen Turbine oder Pumpturbine mit axial verschiebbarer Laufradhaube (6) bestehend aus den Schritten
- Messen von bestimmten Betriebsparametern, wie Drücke, Schwingungen, etc., im Betrieb,
- Verarbeiten dieser Betriebsparameter in einer Regelungseinheit,
- Berechnen der optimalen axialen Verschiebung der Laufradhaube (6) zum Erreichen eines vorgebbaren Betriebszustandes und
- axiales Verschieben der Laufradhaube (6) in die berechnete optimale Position.

15. Verfahren nach Anspruch 13 oder 14, **dadurch gekennzeichnet, dass** Gas, insbesondere Luft, in die Strömung des Betriebsmediums eingebracht wird.
